# EUROPEAN PATENT APPLICATION

(11) **EP 2 578 381 A1**
(43) Date of publication of application: **10.04.2013**
(21) Application number: 11425245.5
(22) Date of filing: 07.10.2011
(51) Int. Cl.: B29C 65/14, B32B 37/04, B32B 37/06

(54) **Process and apparatus for making multilayer plastic-material insulating boards with high thickness**

(71) Applicant: Sirap Insulation S.r.l., 25028 Verolanuova (BS) (IT)
(72) Inventor: Gadola, Giulio, 25028 Verolanuova (Brescia) (IT); Gobetti, Cesare, 25028 Verolanuova (Brescia) (IT)
(74) Representative: Zambardino, Umberto

(57) **Abstract**

The present invention relates to a new process for making a multilayer foamed-plastic-material board (20) having a high thickness starting from boards (3,4) with lower thickness obtained through the normal extrusion processes. According to the process of the invention, said boards (3,4) are arranged onto each other at a predetermined distance from each other and at least one heating element (17) is interposed therebetween, which is capable to melt the plastic material along the respective opposed junction surfaces (3a, 4a) of said boards. The heating elements (17) are then extracted and the boards (3,4) are compressed in order to allow them to adhere by mutual welding along the respective opposed junction surfaces (3a, 4a). The present invention also relates to an apparatus for implementing said process.

## Description

### Field of application

In its more general aspect, the present invention relates to the field of heat insulation and/or soundproofing of buildings or parts thereof, such as roofs, ceilings, inner and/or outer walls.

Particularly, the invention relates to a process for making multilayer plastic-material insulating boards with high thickness.

The invention also relates to an apparatus for implementing the above-mentioned process.

### Prior art

Plastic-material insulating boards, particularly of polystyrene foam (XPS or EPS), are widely used in the building field for heat insulation and/or soundproofing of buildings or parts thereof, such as roofs, ceilings, inner and/or outer walls.

In fact, this insulation is obtained thanks to the particular cell-like structure through which the foamed plastic material is obtained, for example polystyrene foam in whose structure air is trapped, a well-known low heat conductor, thereby ensuring an insulation effect which is substantially constant in time.

Traditionally, making foamed-plastic-material boards, for example of polystyrene (XPS), can be achieved through an extrusion process. In this process, the plastic material, usually pellet-shaped, is introduced into an extruder into which a foaming agent and other suitable additives are also introduced. The plastics material is suitably melted and amalgamated in the extruder obtaining a mixture which is then extruded through a suitable die plate in the shape of a foamed plastic material sheet. This sheet is then cut in the desired size thus obtaining therefrom a plurality of foamed-plastic-material boards.

The present extrusion technology, as briefly above described, allows sheets or boards to be made as a single body with thicknesses usually reaching 120/140 mm, while it is more difficult to manufacture in an efficient way sheets or boards in a single body with a higher thickness.

This is due to some limits of the extrusion process partially linked to the need to have often to use foaming agents which, although ensuring a better environmental impact, for example with respect to hydrochlorofluorocarbons (HCFC) being by then put aside since a longtime because of their harmful effect on the ozone layer, have considerably lower performances with respect to the latter, particularly with the highest thicknesses.

However, the most recent technical regulations concerning heat insulation impose more and more restrictive limits to building heat dispersions and this has actually involved a considerable increase in insulating board thicknesses in order to comply with said regulations.

In order to make thicker boards, for example 160-240 mm, given the above technological limits of the extrusion process, the prior art tended towards making multilayer foamed-plastic-material boards with a high overall thickness. These multilayer insulating boards are obtained through processes which substantially provide making foamed-plastic-material sheets or boards with a more reduced thickness according to known extrusion processes and, afterwards, surface welding of single sheets or boards being overlapped onto each other until a multilayer sheet or board of the desired thickness is obtained.

Welding the single overlapped sheets or boards along the respective coupling surfaces can be performed through several processes, for example by using suitable adhesives and/or mechanical elements, as described for example in the patent applications EP1471125, EP1213119 and EP1213118.

These processes, being performed in a continuous way, certainly seem advantageous since they ensure a high production capacity per time unit.

But, in the meantime, said processes have some drawbacks due to the fact that the apparatuses for their implementation are often complicated and expensive since they require complex systems for moving forward the sheets to be coupled, for spreading the adhesive and for coupling by pressing the sheets operating in a continuous way.

The presence of adhesives could also vary the physical properties of the coupled board (heat insulation, perspiration, reaction to fire) with respect to single boards, besides making an increase in the final product cost.

It is also known to perform the welding of pre-formed single boards and arranged onto each other through the heat-sealing process described in the patent application EP 2284324 wherein heated metal needles are used, which, by passing on the boards arranged onto each other at predetermined points, weld the coupling surfaces thereof.

However this process concentrates the heat of heated needle only at some points of the coupling regions between the boards to be welded so that the coupling could not be optimum or at least suitable for the aims for which the final multilayer board is intended.

The aim of the present invention is thus to provide a new process for making multilayer plastic-material boards having high thickness which overcomes the above-mentioned prior art drawbacks.

A further aim of the present invention is to provide a new process allowing multilayer plastic-material boards having a high thickness to be obtained in a simple way and with reduced costs.

### Summary of the invention

These aims are achieved, according to the invention, by a process for making a multilayer plastic-material board comprising the steps of:
- arranging at least two plastic-material boards with a predetermined thickness onto each other at a predetermined distance from each other,
- interposing at least one heating element in an region between respective opposed coupling surfaces of said at least two boards and keeping said at least one heating element in said region for a time which is sufficient to allow the plastic material of said at least two boards to be substantially melted at said respective opposed coupling surfaces,
- extracting said at least one heating element from said region,
- compressing said at least two boards so as to allow said at least two boards to adhere by mutual welding in the correspondence of said respective opposed coupling surfaces, obtaining said multilayer board.

In the process according to the invention, plastic-material boards to be welded are arranged at a distance which is sufficient to allow the heating element to be interposed therebetween.

Preferably, this distance is chosen so as to bring the heating element in close proximity to the opposed coupling surfaces of the boards, so as to allow the melting thereof, but without contacting them in order to avoid plastic material residues to remain anchored to the heating element, thereby reducing the efficiency thereof and/or compromising the good adhesion between the boards in the following compression step.

At the same time, the distance between the boards to be welded must not be excessive in order not to excessively extend the times required for melting the coupling surfaces of the boards and thus for completing the production cycle of a multilayer board.

In the process according to the invention, the heating element can be advantageously composed of a heat conductor or a radiant element (i.e. capable to emit "heating" radiations); in any case it must be capable to effectively heat the opposed surfaces of the boards to be coupled up to melt them when they are interposed between those surfaces.

The heating element can have different shapes provided that it is compatible with the functional features required; it can be for example pipe, strip or plate-shaped and it is preferably plate-shaped.

For example, when a heat conductor is used, it is advantageous to use an electrically heated metallic-material plate as a heating element.

According to a particularly preferred embodiment of the invention the use of one or more infrared heating elements is provided, preferably shaped as a plate equipped with elements being capable to emit infrared radiations (for example quartz elements).

These infrared heating elements are in fact particularly effective since they provide the heating energy required to melt the opposed surfaces of the boards to be coupled more rapidly and in a more "concentrated" way towards these surfaces, this to the full advantage of a considerable reduction of maintenance times of the heating elements between the opposed surfaces of the boards and thus of the time required to complete the production cycle of a multilayer board.

Advantageously, the heating elements, particularly plate-shaped, are so sized as to cover substantially the whole junction surface of the boards to be coupled, i.e. they have an extension (in width and length) substantially corresponding to that of said junction surface. This is useful to ensure a more uniform heating on the junction surfaces and thus to obtain a continuous welding, i.e. without interrupted regions between the boards in the following compression step.

According to a preferred embodiment of the invention, said at least one heating element is composed of a pair of plates movable simultaneously between an operative heating position wherein they are put in a region between the opposed junction surfaces of the boards to be welded kept spaced from each other, and a rest position wherein the plates are extracted from said region between the opposed junction surfaces of the boards to be welded. In this way, advantageously, it is possible to halve the production cycle times concerning the heating elements insertion and extraction steps.

Advantageously, said plates can have an extension as a whole (in length and width) substantially corresponding to that of the junction surface of the boards so as to substantially cover the whole junction surface of the boards to be welded and thereby obtain a seam and uniform welding.

In the process according to the invention, the compression of the boards to be welded, after melting the respective opposed surfaces and extracting the heating elements, is performed through a press applied for a predetermined time and with a predetermined pressure on at least one of the opposed sides of the set of boards overlapping each other.

Preferably, the press is of the plate-like type, i.e. having a single plate or a pair of plates applied on the opposed sides of the set of boards overlapping each other.

Preferably, the compression of the boards to be coupled is performed through a press by applying a suitable pressure according to the plastic material composing these boards.

The compression through a press, unlike other compression systems used in continuous processes such as for example compression rollers, allows the boards to adhere in an effective way by suitably controlling the pressing time and the force applied, thereby ensuring that the final thickness of the multilayer board obtained at the end of the compression falls within the tolerances provided.

Concerning the boards which can be used in the process according to the invention, it must be said that they can be obtained through the known extrusion techniques, already mentioned above in the chapter concerning the prior art, and with a predetermined thickness which is obviously lower than that required for the final multilayer board.

Preferably, the board plastic material is a foamed thermoplastic material. Expanded polystyrene having cells substantially closed is particularly preferred as a plastic material.

The desired final thickness for the multilayer board can be thus obtained by varying the thickness of the initial monolayer boards to be coupled, the latter being obtained through the normal known extrusion processes.

To this purpose, it must be noticed that the overall thickness resulting from the sum of the single thicknesses of the initial boards to be coupled must be higher than the thickness desired for the final multilayer board since it must be taken into account that, in the process according to the invention, the heating and pressing steps causes a decrease in this overall thickness.

The definition of the thicknesses of the initial boards to be coupled and thus of the overall thickness resulting therefrom can be easily determined a priori through routine operations, being per se conventional, according to the final thickness desired for composite boards and to process parameters such as particularly the heating element temperature, the heating and pressing cycle times as well as the force applied during pressing.

The aims of the present invention are also achieved through an apparatus for implementing the above-mentioned process according to the invention.

This apparatus comprises:
- at least one spacer device to keep a plurality of boards onto each other and in a predetermined spaced position between each other,
- at least one movable heating element associated to means for moving said movable heating element between an operative position wherein it is interposed in at least one region between opposed surfaces of said boards and a rest position wherein it is extracted from said at least one region between said opposed surfaces,
- a compression station to compress said boards.

The main advantage of the process according to the invention lies in the fact that it is possible to make good-quality multilayer insulating boards with the desired thicknesses in a simple way and with reduced costs.

In fact it must be noticed that the process according to the invention, although being discontinuous, does not require complex apparatuses as those of the prior art. In fact, right because the process according to the invention requires simpler operations, it can be implemented by using particularly compact and easily accessible apparatuses.

Moreover, through the process according to the invention it is possible to achieve production cycles of the single multilayer boards which are relatively reduced and thus production capacities quite suitable for the different needs.

Further features and advantages of the present invention will be more apparent from the following description of a preferred embodiment, given with reference to the attached drawings and provided by way of not limiting example.

### Brief description of the drawings

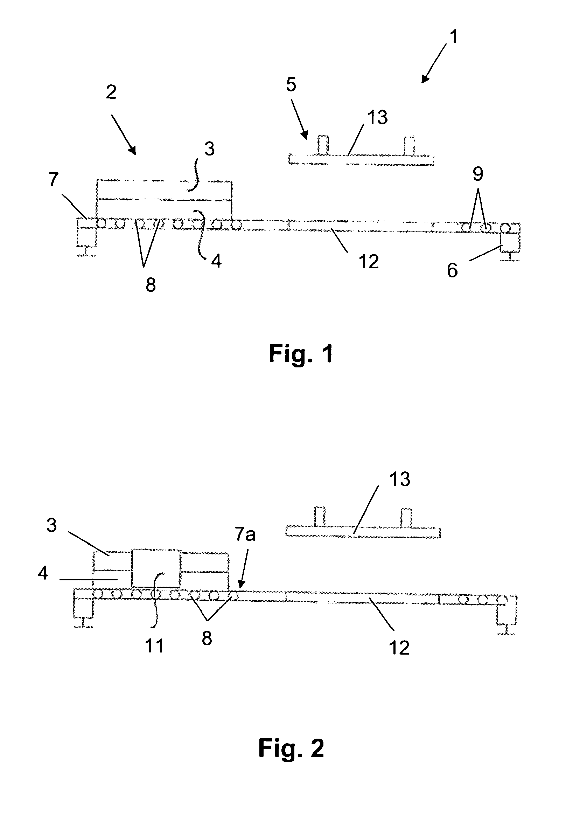

Figures 1 to 10 schematically show an apparatus for implementing the process according to the invention in respective steps of this process.

### Detailed description

With reference to figures 1-10, an apparatus according to the invention is indicated with reference 1 as a whole.

The apparatus 1 comprises a loading station 2 for a plurality of boards 3,4 having each a predetermined thickness being lower than the desired one and a pressing station 5 of these boards 3.

The loading station 2 and the pressing station 5 are suitably arranged on a frame 6 having an upper plane 7 wherein rollers 8,9 are integrated in a manner per se conventional.

Particularly, a first plurality of rollers 8 can be found in the plane 7, positioned upstream of the pressing station 5 to facilitate the transport of the boards 3,4 from the loading station 2 towards the pressing station 5 and a second plurality of rollers 9 positioned downstream of the pressing station 5 to facilitate the transport of multilayer boards 20 having a desired thickness and obtained in the pressing station at the output of the pressing station 5.

In the present embodiment, the loading station 2 comprises a first portion 7a of the plane 7 positioned upstream of the pressing station 5 and wherein the first rollers 8 are integrated.

This loading station 2 receives, on said first portion 7a of the plane 7, a plurality of monolayer boards overlapped onto each other, for example two boards, a lower one 4 and an upper one 3 (but they can also be more than two according to need). The boards 3,4 have each a lower thickness than that desired for the final product, and they are obtained for example through per se conventional extrusion processes.

The loading of boards 3,4 on the first portion 7a of the plane 7 can be performed both manually by a suitable operator and automatically through suitable devices (not shown) which are per se conventional.

Advantageously, the loading station 2 comprises a first pushing element 10 movable bi-directionally on the plane 7 along the longitudinal advance direction A of the boards 3,4 and a pair of second pushing elements 11 arranged on the respective sides of said first portion 7a of the plane 7 and movable from and towards the plane 7 along a substantially transverse direction to the advance direction A of the boards 3,4 towards the pressing station 5.

The second pushing elements 11, when advanced transversally towards the plane 7, are capable to intercept laterally the overlapped boards 3,4 allowing a substantial alignment thereof, the latter being functional to the good success of the following steps of the process according to the invention (particularly compression).

The first pushing element 10 is instead movable along the longitudinal direction A of the plane 7 so as to intercept the boards 3,4 arranged on the plane 7 and push them through a translation movement on the plane 7 up to put them in the pressing station 5 or in alternative to intercept in the pressing station 5 a multilayer board 20 obtained after pressing said boards 3,4 to push it through a translation movement on a third portion 7c of the plane 7 positioned downstream of the pressing station 5 and wherein the second rollers 9 are integrated.

Advantageously, said translation movements of monolayer boards 3,4 and of the multilayer board 20 are facilitated by the presence of the first rollers 8 integrated in the first portion 7a of the plane 7 and of the second rollers 9 integrated in the third portion 7c of the plane 7 respectively.

The first pushing element 10 and the second pushing elements 11 are suitably operated by motor means (not shown) being per se conventional.

The pressing station 5 comprises, in the present embodiment of the invention, a pair of opposed plates and precisely a lower plate 12 and an upper plate 13.

In this embodiment, the lower plate 12 is fixed and it is integrated in a second portion 7b of the plane 7 straddling the first portion 7a of said plane comprising the first rollers 8 and the third portion 7c comprising the second rollers 9.

The upper plate 13 is instead movable between a rest position wherein it is positioned at a predetermined distance from the lower plate 12, so as to form between the upper plate 13 and the lower plate 12 a housing region of the boards 3,4 to be coupled, and an operative position wherein the upper plate 13 is brought closer to the lower plate 12 to heat-seal the boards 3 (previously heated along the respective coupling surfaces) exerting thereon a suitable pressure.

The upper plate 13 is suitably operated by motor means (not shown) being per se conventional.

The apparatus 1 also comprises a spacer device 14 to keep the boards 3,4 to be coupled onto each other in a spaced position from each other before the compression step.

This spacer device 14 is positioned substantially along the pressing station 5 and it comprises a moving frame 15 controlled by suitable motor means (not shown) ending with a pair of opposed arms 16, positioned on the respective sides of the upper plate 13.

The spacer device 14 is movable between an operative position wherein at least one of the overlapped boards coming from the loading station (in the present example the upper board 3) is engaged laterally by the opposed arms 16 and kept spaced with respect to a fixed board (in the present example the lower board 4) and therebetween, and a rest position wherein the opposed arms 16 are disengaged by said at least one board (the upper board 3).

Particularly, in the present embodiment of the apparatus 1, the spacer device 14 raises the upper board 3 up to bring it substantially in contact with the upper plate 13 wherein it is kept by the arms 16, the plate 13 being thus advantageously a limit stop for reaching said operative position.

Of course, if it were necessary to couple a higher number of boards (three or more), it is possible to change the spacer device 14 so as to provide a pair of arms for each board to be raised as well as suitable means to control these arms so as to raise the single boards and keep them in a spaced position from each other.

The apparatus 1 also comprises a heating element, as the above-indicated ones, whose function is to heat and substantially melt the opposed junction surfaces of the boards 3,4 to be welded.

In the present embodiment, the heating element is advantageously composed of a pair of plates 17 movable between an operative heating position wherein they are put in a region 18 between the respective opposed junction surfaces 3a, 4a of the upper board 3 and of the lower board 4 kept in a spaced position from each other, and a rest position wherein the plates 17 are extracted from said region between the respective opposed junction surfaces 3a, 4a of said upper board 3 and of said lower board 4.

The plates 17 are suitably connected to motor means (not shown) and they are substantially approached laterally in the operative heating position. Advantageously, the overall extension of the plates 17 is such as to substantially cover the whole junction surface 3a, 4a of the boards 3,4 to be welded so as to have a continuous and uniform welding.

Of course, if it were necessary to couple a higher number of boards (three or more), it is possible to provide a heating element (for example a pair of plates 17 of the above-described type) for each region between opposed junction surfaces of consecutive boards and kept in a spaced position from each other, as well as suitable means to control these heating elements so as to insert and extract them from the respective regions between opposed junction surfaces of consecutive boards for implementing the heating step according to the process of the invention.

Concerning the operation of the apparatus 1 for implementing the process according to the invention, it is to be said that in an initial step the boards 3,4 to be mutually welded are loaded (manually or through automatic systems) on the plane 7 onto each other in the correspondence of the loading station 2 (figure 1). The boards 3 are thus substantially aligned by means of the second pushing elements 11 (figure 2) and subsequently pushed by the first pusher 10 on the plane 7 along the longitudinal direction A towards the pressing station 5. This pushing action ends when a first limit stop is reached by the first pusher 10 corresponding to the insertion of the boards 3,4 to be welded in the pressing station 5 between the lower plate 12 and the upper plate 13 and directly onto the lower plate 12 (figure 3).

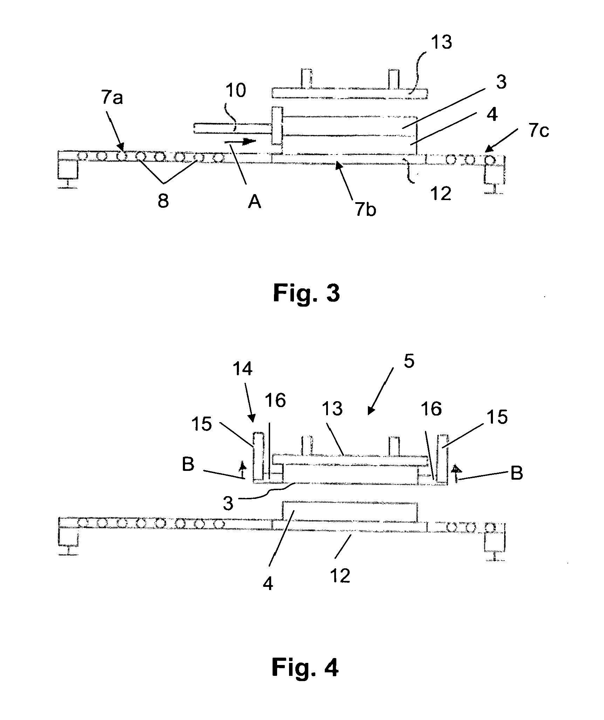

Afterwards (figure 4), the spacer device 14 provides to space the upper board 3 from the lower board 4 first of all by engaging laterally, through a horizontal movement approaching towards the boards 3,4, the upper board 3 with the opposed arms 16 and thus, through a vertical movement along the vertical direction B approaching towards the upper plate 13, by raising the upper board 3 up to bring it substantially in contact with the upper plate 13 wherein it is kept by the arms 16.

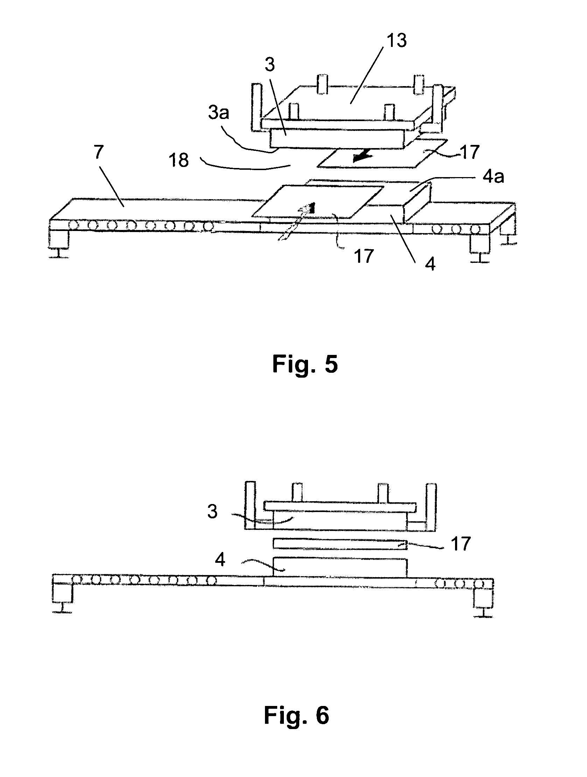

At this point, with the upper board 3 being still kept by the opposed arms 16 against the upper plate 13, the heating plates 17, suitably moved by motor means, are inserted into the region 18 between the opposed junction surfaces 3a,4a of the upper board 3 and of the lower board 4 up to reach a position wherein the plates 17 are substantially juxtaposed laterally to each other (figures 5-6).

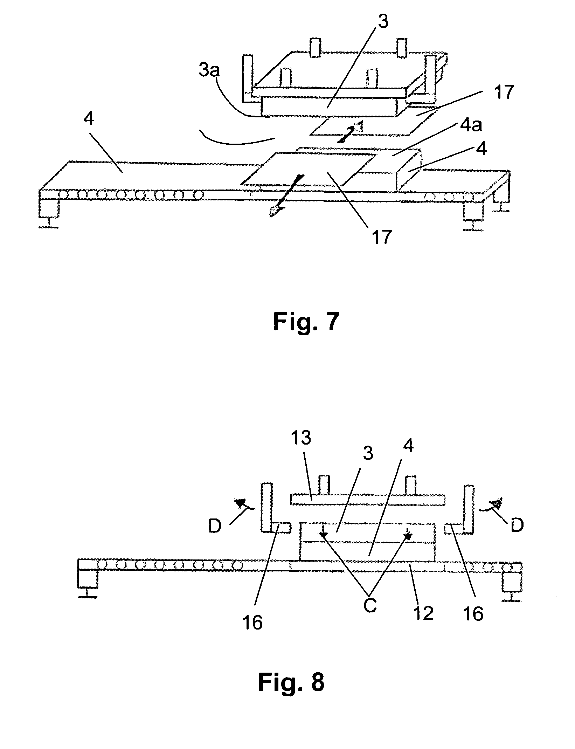

After a suitable heating time being functional to obtain the melt of the upper board 3 and of the lower board 4 in the correspondence of the respective opposed junction surfaces 3a, 4a, the plates 17 are extracted from the region 18 between the opposed boards 3,4 (figure 7) and thus, just after the extraction, the upper board 3 is brought into contact with the lower board 4 by mutual overlapping with the respective junction surfaces 3a,4a (figure 8). Particularly, as shown in figure 8, this last step is achieved through a vertical descending movement of the spacer device 14 and of the upper board 3 constrained by the arms 16 thereof up to substantially put the upper board 3 onto the lower board 4 (arrows C) followed by a horizontal movement of the spacer device 14 spreading apart from the boards 3,4, thus involving the separation of the arms 16 from the upper board 3 (arrows D).

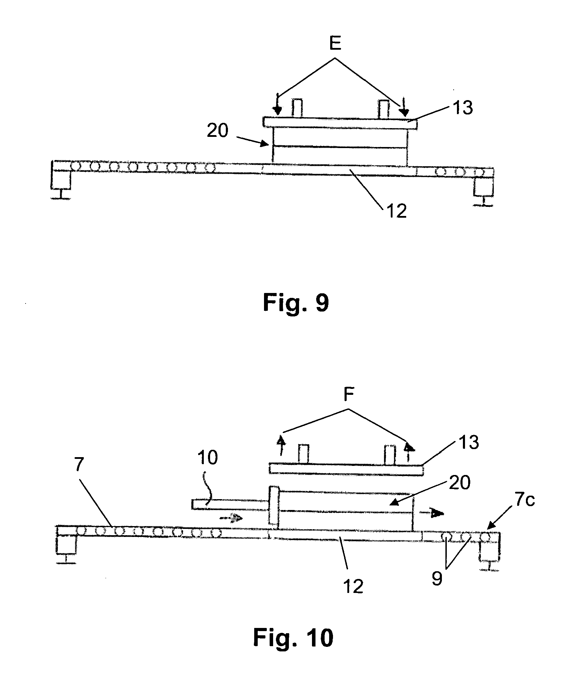

At this point (figure 9), the compression of the boards 3 is performed, making the upper plate 13 descend vertically towards the lower plate 12 (arrows E) and applying a suitable pressure on the upper board 3 and on the lower board through those plates 12,13 thus obtaining a suitable heat-seal of the boards 3,4 and forming a multilayer board 20.

After the compression/heat-sealing, the upper plate 13 is spread apart from the lower plate (arrows F in figure 10) and thus the multilayer board 20 is extracted from the pressing station 5. The extraction is performed through the first pushing element 10 which, moving along the longitudinal direction A of the plane 7, intercept the multilayer board 20 pushing it through a translation movement on the portion 7c of the plane 7 positioned downstream of the pressing station 5 and wherein the second rollers 9 are integrated. This pushing action ends when a second limit stop is reached by the first pusher 10 corresponding to the multilayer board 20 reaching the portion 7c of the plane 7.

Obviously, with the aim of meeting specific and contingent requirements, a skilled in the art could bring several changes and variations to the above-described process and apparatus according to the invention, all however falling within the scope of protection of the invention, as defined by the following claims.

For example, in the above-described apparatus 1, a skilled in the art can provide, instead of the first pusher 10, a functionally-equivalent device, such as a roller device for transporting monolayer boards 3,4 which is retractably-operating in the second portion 7b of the plane 7 (where the lower plate 12 is present). In substance, this transport device could comprise rollers integrated in the second portion 7b of the plane 7, between the first rollers 8 and the second rollers 9 and movable between a raised position wherein said rollers are operating for transporting the monolayer boards 3,4 and a lowered rest position wherein said rollers are housed in a retractable way in a suitable seat below the upper surface of the plane 7.

Moreover, the spacer device 14 with arms 15,16 can be replaced in a functionally equivalent way by a suction device integrated in the upper plate 13. In this way, by creating a suitable vacuum, the suction device allows the upper board 3 to be spaced from the lower board 4 and the upper board 3 to be kept against the upper plate 13 during the steps of spacing the boards (fig. 4), inserting the heating elements (fig. 5), heating (fig. 6) and extracting the heating elements (fig. 7). In this way, it is possible to do without the overlapping step of the boards 3,4 after heating with melting of the respective junction surfaces and before compression, as above described with reference to figure 8, consequently reducing the production cycle time.

## Claims

1. A process for making a multilayer plastic-material board (20) comprising the steps of:
- arranging at least two plastic-material boards (3,4) having a predetermined thickness onto each other at a predetermined distance from each other,
- interposing at least one heating element (17) in a region (18) between respective opposed coupling surfaces (3a,4a) of said at least two boards (3,4) and keeping said at least one heating element (17) in said region (18) for a time being sufficient to allow the plastics material of said at least two boards (3,4) to be substantially melted at said respective opposed coupling surfaces (3a,4a),
- extracting said at least one heating element (17) from said region (18),
- compressing said at least two boards (3,4) in order to allow said at least two boards (3,4) to adhere by mutual welding at said respective opposed coupling surfaces (3a,4a), obtaining said multilayer board (20).

2. A process according to claim 1, wherein said at least one heating element (17) is composed of a heat conductor or of a preferably infrared radiant element.

3. A process according to claim 1 or 2, wherein said heating element is plate-shaped and it has preferably an extension substantially corresponding to that of said opposed junction surfaces (3a,4a) of said at least two boards (3,4)

4. A process according to claim 1 or 2, wherein said at least one heating element is composed of a pair of plates (17) movable simultaneously between an operative heating position wherein they are inserted into said region (18) between said opposed junction surfaces (3a,4a) of said at least two boards (3,4) kept spaced from each other, and a rest position wherein said plates (17) are extracted from said region (18) between said opposed junction surfaces (3a,4a) of said at least two boards (3,4), said plates (17) also having preferably an overall extension substantially corresponding to that of said opposed junction surfaces (3a,4a) of said at least two boards (3,4).

5. A process according to any of the previous claims, wherein said compression step is achieved through a press (5) equipped with a single plate or a pair of opposed plates (12,13) applied on the opposed sides of the set of said at least two boards (3,4).

6. A process according to any of the previous claims, wherein the plastic material of said at least two boards (3,4) is a foamed thermoplastic material, preferably expanded polystyrene having cells substantially closed.

7. An apparatus (1) for making multilayer plastic-material boards comprising:
- at least one spacer device (14) to keep a plurality of boards (3,4) onto each other and in a predetermined spaced position from each other,
- at least one heating element (17) movable between an operative position wherein it is interposed in at least one region (18) between opposed surfaces (3a,4a) of said boards and a rest position wherein it is extracted from said at least one region (3a,4a) between said opposed surfaces (3a,4a),
- a compression station (5) to compress said boards (3,4).

8. An apparatus (1) according to claim 7, wherein said compression station (5) comprises a pair of plates (12,13) being opposed to each other, at least one of said plates (12,13) being movable between a rest position wherein said plates (12,13) are at a predetermined distance from each other so as to form therebetween a housing region of said boards (3,4), and an operative position wherein said plates (12,13) are brought closer so as to exert a pressure on said boards (3,4).

9. An apparatus (1) according to claim 7 or 8, wherein said spacer device (14) comprises a moving frame (15) ending with at least one pair of opposed arms (16), said spacer device (14) being movable between an operative position wherein at least one of said boards (3,4) is engaged laterally by said opposed arms (16) and shifted so as to keep said boards (3,4) in a spaced position from each other and a rest position wherein said opposed arms (16) are disengaged from said at least one of said boards (3,4).

10. An apparatus (1) according to claim 7 or 8, wherein said spacer device (14) comprises a suction system integrated in said compression station.

11. An apparatus (1) according to any of claims 7 to 10, wherein said at least one heating element (17) is composed of a pair of plates (17) movable simultaneously between said operative position and said rest position, said plates (17) also having preferably an overall extension substantially corresponding to that of the opposed junction surfaces (3a,4a) of said boards (3,4).
